(19) Europäisches Patentamt

European Patent Office

Office européen des brevets

(11) **EP 1 159 304 B1**

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(21) Anmeldenummer: **00909183.6**

(22) Anmeldetag: **16.02.2000**

(51) Int Cl.⁷: **C08F 2/34**, C08F 2/00,
C08F 10/00, B01J 19/24,
B01J 8/00

(86) Internationale Anmeldenummer:
**PCT/EP00/01253**

(87) Internationale Veröffentlichungsnummer:
**WO 00/049055 (24.08.2000 Gazette 2000/34)**

(54) **VERFAHREN UND APPARAT ZUR GASPHASENPOLYMERISATION VON ALPHA-OLEFINEN**

METHOD AND APPARATUS FOR GAS PHASE POLYMERISATION OF ALPHA-OLEFINS

PROCEDE ET DISPOSITIF DE POLYMERISATION EN PHASE GAZEUSE D'ALPHA-OLEFINES

(84) Benannte Vertragsstaaten:
**DE ES FI FR GB IT**

(30) Priorität: **19.02.1999 DE 19907021**

(43) Veröffentlichungstag der Anmeldung:
**05.12.2001 Patentblatt 2001/49**

(73) Patentinhaber: **Basell Polyolefine GmbH**
**77694 Kehl (DE)**

(72) Erfinder: **WEICKERT, Günter**
**D-48683 Ahaus (DE)**

(56) Entgegenhaltungen:
**EP-A- 0 574 821**          **WO-A-97/04015**
**DE-A- 3 217 973**          **DE-A- 19 634 450**
**FR-A- 550 233**            **US-A- 4 740 551**
**US-A- 5 378 434**

**Beschreibung**

Gegenstand der vorliegenden Erfindung ist ein Verfahren zur Gasphasenpolymerisation von α-Olefinen bei Temperaturen zwischen 20 und 130oC und Drücken von 1 bis 100 bar. Weiter betrifft die Erfindung einen röhrenförmigen Reaktor zur Gasphasenpolymerisation von α-Olefinen mit einem Länge:Durchmesser-Verhältnis von >100.

Zur Polymerisation von α-Olefinen, insbesondere zur Homo- und Copolymerisation von Ethylen und Propylen sowie zur Copolymerisation dieser Olefine mit höheren α-Olefinen haben sich Gasphasenpolymerisationsverfahren als besonders wirtschaftliche Verfahren bewährt. Insbesondere zur Herstellung von Ethylenhomo- und -copolymeren werden diese Gasphasenpolymerisationen meist in Wirbelschichtreaktoren durchgeführt. Beispiele für solche Gasphasenwirbelschichtverfahren werden in US-A-5 208 109 und in US-A-5 041 473 beschrieben.

Bei den bekannten Gasphasenwirbelschichtverfahren wird das Reaktionsgas, welches neben den Monomeren gegebenenfalls auch Regler und Inertgase enthalten kann, im Kreis geführt und zur Durchmischung des Wirbelbetts, welches aus kleinteiligen Polymerisatpartikeln besteht, genutzt. Im Verlauf des Polymerisationsprozesses wachsen die Polymerisatpartikeln und werden entweder kontinuierlich oder intermittierend aus dem Reaktor ausgetragen. Durch die nahezu perfekte Durchmischung des Wirbelbettes und durch den Austrag nur eines geringen Teils des Reaktorinhalts weisen die Polymerpartikeln im Reaktor eine sehr unterschiedliche Verweilzeit auf. So werden teilweise Partikeln ausgetragen, die nur sehr kurze Zeit dem Polymerisationsprozeß ausgesetzt waren und entsprechend geringe Durchmesser haben. Andererseits gibt es Partikeln, die sich lange im Polymerisationsreaktor aufgehalten haben, bevor sie aus dem Reaktor ausgetragen werden. Das Ergebnis ist, daß die Polymerisatpartikeln eine sehr breite Verweilzeitverteilung aufweisen.

Um eine definierte strukturelle Inhomogenität des Polymeren zu erzielen, z.B. bei der Erzeugung von bimodalem Polyethylen oder sogenanntem High Impact Polypropylen, kann man die Polymerisation entweder in mehreren Apparaten oder in unterschiedlichen Reaktionszonen desselben Apparates durchführen, in jedem Fall müssen die Polymerisatpartikeln aber verschiedenen Reaktionsbedingungen ausgesetzt sein. Diese unterschiedlichen Reaktionsbedingungen können z.B. durch unterschiedliche Temperatur, unterschiedlichen Druck, unterschiedliche Monomerkonzentrationen oder unterschiedliche Konzentrationen des Reglers wie beispielsweise Wasserstoff oder Kombinationen davon gekennzeichnet sein. Ist die Verweilzeitverteilung der Polymerisatpartikeln in den unterschiedlichen Reaktionszonen oder in den unterschiedlichen Reaktionsapparaten jedoch breit, wie es bei der oben geschilderten Gasphasenwirbelschichtpolymerisation der Fall ist, so verschwimmen die durch die unterschiedlichen Prozeßparameter erzielten Polymerisateigenschaften und das Polymerprodukt weist eine breite statistische Verteilung unterschiedlicher Polymerpartikeln auf.

Um den Einfluß einer breiten Verweilzeitverteilung und die damit verbundene Breite der Verteilung der Partikeleigenschaften zu vermindern wurden Ansätze verfolgt, die Zahl der hintereinander gekoppelten Reaktoren zu vergrößern. So wird in US-A-5 504 166 ein horizontal liegender Reaktor beschrieben, dessen Volumen in Kammern unterteilt wurde, so daß das Polymerisatpulver nur von Kammer zu Kammer vorwärtsfließen kann. Die Kammern selber können dabei als nahezu ideal durchmischt angesehen werden. Das Polymerisatpulver in den einzelnen Kammern wird durch mechanische Rührer durchmischt.

Ein ähnliches Gasphasenpolymerisationsverfahren wird in US-A-5 378 434 beschrieben. Bei diesem Verfahren bestehen die einzelnen Reaktionskammern aus Polymerisatwirbelschichten, in den verschiedenen Kammern können dabei unterschiedliche Gaszusammensetzungen eingestellt werden, so daß die Herstellung bi- oder multimodaler Polymerisate möglich ist. Durch die nahezu ideale Durchmischung der Polymerpartikel in den einzelnen Reaktorkammern weisen aber auch diese Prozesse relativ große Produktinhomogenitäten aufgrund der breiten Verweilzeitverteilung der Polymerpartikeln in den einzelnen Reaktoren auf.

Die Unterschiede in der Struktur des Polymeren von Teilchen zu Teilchen und damit die Inhomogenität des Polymerproduktes sind um so größer je breiter die Verweilzeitverteilung ist. Aus reaktionstechnischen Grundlagen ist bekannt, daß der einzelne gut durchmischte Reaktor wie z.B. ein Rührkessel oder ein Wirbelbettreaktor die breiteste Verweilzeitverteilung und ein Rohrreaktor mit Pfropfenströmung die engste Verweilzeitverteilung aufweisen. Im theoretischen Idealfall entspricht der Pfropfenstromrohrreaktor einer Reaktorkaskade mit unendlich vielen Mischzellen.

In WO-97/04015 wird nun ein Gasphasenpolymerisationsverfahren beschrieben, welches in einem Strömungsrohr durchgeführt wird. Dieses Strömungsrohr ist jedoch als Schleife angeordnet, so daß die Polymerisatpartikel während des Polymerisationsprozesses im Kreis geführt werden. Da die Partikelzirkulationszeiten in diesem Schleifenreaktor sehr kurz sind, um eine intensive Durchmischung der Partikeln zu erreichen, und diese Partikelzirkulationszeiten weit unterhalb der mittleren Verweilzeit liegen, weist auch dieser Prozeß eine Partikel-Verweilzeitverteilung auf, die sich von einem üblichen Wirbelbettreaktor nicht wesentlich unterscheidet.

Der vorliegenden Erfindung lag nun die Aufgabe zugrunde, ein Gasphasenpolymerisationsverfahren zur Polymerisation von α-Olefinen bereitzustellen, welches durch eine enge Verweilzeitverteilung der Polymerisatpartikeln gekennzeichnet ist und dadurch geeignet ist, insbesondere bimodale und multimodale Polymerisate von ausgezeichneter Homogenität herzustellen.

Demgemäß wurde ein Verfahren zur Gasphasenpolymerisation von α-Olefinen bei Temperaturen zwischen 20 und 130°C und Drücken von 1 bis 100 bar gefunden, welches dadurch gekennzeichnet ist, daß man die Polymerisation in einem röhrenförmigen Reaktor mit einem Länge:Durchmesserverhältnis von >100 durchführt, wobei die wachsenden Polymerpartikeln den röhrenförmigen Reaktor in seine Längsrichtung durchlaufen, ohne daß ein wesentlicher Teil des Polymerpartikelstroms im Kreis geführt wird. Weiterhin wurde ein röhrenförmiger Reaktor zur Gasphasenpolymerisation. von α-Olefinen mit einem Länge:Durchmesserverhältnis von >100 gefunden, welcher mindestens eine Einrichtung zur Reaktionsgaseinspeisung, mindestens eine Einrichtung zur Katalysatoreinspeisung, ein Polymeraustragssystem und mindestens eine Einrichtung zur Abtrennung des Reaktionsgases von den Polymerpartikeln und Rückführung des Reaktionsgases in den Eingangsbereich des Reaktors oder zur Einspeisung des Reaktionsgases stromaufwärts von der Abtrennposition aufweist.

Die Reaktionsbedingungen des erfindungsgemäßen Verfahrens entsprechen hinsichtlich Temperatur und Druckverhältnissen im allgemeinen denen von bekannten Gasphasenwirbelschichtverfahren, wobei das Verfahren allerdings die Möglichkeit bietet, diese Temperaturen in den üblichen Bereichen an verschiedenen Teilen des Reaktors zu variieren. Das Verfahren kann bei Temperaturen zwischen 20 und 130°C, insbesondere bei Temperaturen zwischen 70 und 120°C und besonders vorteilhaft zwischen 80 und 110°C durchgeführt werden. Auch die Reaktionsdrücke können in den Bereichen liegen, wie sie für Gasphasenwirbelschichtpolymerisationen üblich sind. So läßt sich das Verfahren vorteilhaft bei Drücken zwischen 5 und 50 bar, besonders bevorzugt bei Drücken zwischen 15 und 30 bar durchführen.

Ein wichtiges charakteristisches Merkmal für den erfindungsgemäßen Reaktor ist sein Länge:Durchmesserverhältnis. Je größer dieses Länge:Durchmesserverhältnis ist, desto enger wird im allgemeinen die Verweilzeitverteilung der Polymerpartikeln. Bei extrem langen und dünnen Reaktoren ist entweder der Druckabfall in Richtung der Längskoordinate unökonomisch groß oder der erreichte Durchsatz zu klein, so daß die Reaktorgeometrie hierdurch begrenzt wird. Gute Strömungsverhältnisse der Polymerisatpartikeln mit annähernd pfropfenförmiger Strömung sowie enge Verweilzeitverteilungen der Polymerisatpartikeln erhält man bereits bei Polymerisationsreaktoren mit einem Länge:Durchmesserverhältnis von >100, vorzugsweise haben die röhrenförmigen Reaktoren ein Länge:Durchmesserverhältnis von >300, besonders bevorzugt zwischen 300 und 1000.

Die Geometrie eines erfindungsgemäßen Reaktors für den technischen, kommerziellen Maßstab ist durch einen Rohrdurchmesser im Bereich von 10 bis 100 cm und eine Länge von 50 bis 2000 m gekennzeichnet.

Im Gegensatz zu dem in WO-97/04015 beschriebenen Gasphasenpolymerisationsverfahren, welches in einem schleifenförmigen Rohrreaktor durchgeführt wird, ist das erfindungsgemäße Polymerisationsverfahren dadurch gekennzeichnet, daß die Polymerpartikeln den röhrenförmigen Reaktor in seiner Längsrichtung durchlaufen, ohne daß ein wesentlicher Teil des Polymerpartikelstroms im Kreis geführt wird. Geringe Teile des Polymerpartikelstroms können z.B. in erfindungsgemäßen Reaktoren, bei denen im Verlauf der Polymerisation die Gaszusammensetzung geändert werden soll und dabei ein Teil des Reaktionsgases abgetrennt und an den Anfang oder eine stromaufwärts gelegene Position zurückgeführt wird, mit diesem zirkulierenden Reaktionsgas mitgerissen werden und auf diese Weise im Kreis geführt werden. Auch kann in Teilen des Reaktors, deren Gesamtlänge jedoch klein gegen die Reaktorlänge ist, eine intensivere Rückvermischung des Pulvers, z.B. aus wärmetechnischen Gründen, zur besseren Einmischung von zugespeisten Komponenten, zur Ermöglichung einer gleichmäßigeren Monomersorption in das Polymerpulver oder zur Abtrennung unerwünschter Polymerfraktionen, erfolgen, ohne daß die Breite der Gesamtverweilzeitverteilung dadurch wesentlich beeinträchtigt wird. Die Hauptmenge der Partikeln durchläuft jedoch den erfindungsgemäßen Rohrreaktor nur in seiner Längsrichtung.

Der geringe Anteil an im Kreis geführten Polymerpulver kann auch durch das Kreislaufverhältnis (KLV) beschrieben werden:

$$KLV = \frac{\sum \text{Polymermassenströme in Rückführungen}}{\text{Polymermassenstrom am Reaktorausgang}}$$

Erfindungsgemäß ist das KLV in der Regel < 0,1, vorzugsweise < 0,05.

Das erfindungsgemäße Verfahren wird vorzugsweise so durchgeführt, daß das Feststoffmassenverhältnis zwischen den Massenströmen am Reaktoreingang (Katalysatorpartikeln oder Präpolymerisat) zum Reaktorausgang (Polymerisat) < 1:100, besonders bevorzugt < 1:1000 ist. Weiterhin ist im allgemeinen das Verhältnis der Masse des hergestellten Polymerisats zu der Masse der Katalysatormetallkomponente >50 000, vorzugsweise >100 000, besonders bevorzugt > 500 000.

Das erfindungsgemäße Verfahren wird vorzugsweise in einem röhrenförmigen Reaktor durchgeführt, der im wesentlichen vertikal angeordnet ist. Ein solcher Reaktor weist alternierend aufwärts bzw. abwärts gerichtete Rohrabschnitte auf, die jeweils durch Bögen mit relativ geringem Radius miteinander verbunden sind. Der Durchmesser des Rohres kann dabei variieren. So kann es vorteilhaft sein, daß z.B. der Durchmesser der aufwärts gerichteten Rohrabschnitte wenigstens teilweise geringer ist als der der abwärts gerichteten Abschnitte. Bei solchen Reaktoren bezieht sich das oben genannte Länge:Durchmesser-Verhältnis dann auf den mittleren Durchmesser des Reaktors. Durch die vertikale Anordnung der Reaktorröhren wird ein besonders guter Kontakt von Gas und Polymerpartikelpulver erreicht und das unerwünschte Absetzen des Pulvers infolge der Schwerkraft mit katastrophalen Folgen (Wandbeläge, lokaler Hotspot) kann wesentlich besser vermieden werden.

In den vertikalen Rohrteilen mit aufwärts gerichteter Strömung beträgt im allgemeinen die Strömungsgeschwindigkeit ein Mehrfaches der minimalen Fluidisierungsgeschwindigkeit, während in den Reaktorteilen mit abwärts gerichteter Teilchenströmung die Gasströmungsgeschwindigkeit wesentlich geringer sein kann. Bei im oberen Teil des Reaktors erfolgter Trennung von Gas und Feststoff kann sich das Gas hier sogar im Gegenstrom zur Partikelphase bewegen, d.h. aufwärtsgerichtet in einem vom Hauptstrom getrennten Gaskreislauf. Die Reaktorteile mit abwärtsgerichteter Partikelströmung können damit sowohl schwach fluidisiert als auch als Rieselreaktoren mit relativ hohen Feststoffphasenanteilen betrieben werden.

Eine bevorzugte Ausführungsform des erfindungsgemäßen Verfahrens ist dadurch gekennzeichnet, daß die effektive Axialgeschwindigkeit des Polymerpulvers in Reaktorteilen mit aufwärts gerichteter Strömungsrichtung weniger als 80 % der Geschwindigkeit des Reaktionsgases in diesen Reaktorteilen beträgt. Die effektive Axialgeschwindigkeit des Polymerpulvers in diesen Reaktorteilen mit aufwärts gerichteter Strömungsrichtung beträgt vorzugsweise 5 bis 200 cm/sec, besonders bevorzugt 10 bis 100 cm/sec. In den abwärts gerichteten Rohrteilen liegt diese Geschwindigkeit dagegen in der Regel zwischen 200 cm/s (im Fall des Gleichstromes von Gas- und Teilchenstrom) und 2 cm/s (im Fall des Gegenstroms).

Besonders bevorzugt herrscht in den abwärtsdruchströmten Rohrteilen eine effektive Axialgeschwindigkeit des Polymerpulvers von ca. 1 bis 5 cm/s.

Die aufwärtsgerichteten vertikalen Rohrteile können aber auch im sogenannten "Slugging"-Regime betrieben werden. Dabei erreicht der Durchmesser der über der Reaktorlänge wachsenden Gasblasen unter dem Fachmann wohlbekannten Bedingungen den Durchmesser des Rohres, und es bilden sich Polymerpulverpfropfen ("Slugs") unterschiedlicher Länge, die vom Gas mit relativ gleichmäßiger Geschwindigkeit nach oben transportiert werden. Dabei sind die Slugs entlang der Reaktorlänge alternierend angeordnet, so daß sich die feststoffreichen Slugs mit feststoffarmen Gaspfropfen abwechseln. Vom Ende eines Slugs rieselt während des Transportes Pulver durch den dazwischenliegenden Gaspfropfen auf den "Kopf" des nachfolgenden Slugs, während gleichzeitig jeder Slug von Gas mit geringer Geschwindigkeit in Strömungsrichtung durchströmt wird. Die Zeit zwischen dem Entstehen und Zerfallen eines Slugs liegt in der Größenordnung von einigen Sekunden, so daß sich auch bei relativ großer Polymerisationswärmeentwicklung keine wirklich bedeutsamen Temperaturgradienten im Slug aufbauen können.

Besonders vorteilhaft bei dieser Betriebsweise sind weiterhin:

    a) die Selbstreinigung der Reaktorwand infolge der Scherwirkung des Pulvers in Reaktorwandnähe
    b) die in weiten Grenzen variier- und steuerbare Verweilzeit des Pulvers
    c) die Erschwerung des Herausblasens von kleinen Teilchen (Katalysator!)
    d) die gehemmte Rückvermischung des Pulvers

Kombiniert man die im Slugging betriebenen feststoffreichen aufwärtsgerichteten Rohrteile mit im Gleichstrom von Gas und Pulver betriebenen abwärtsgerichteten Rohrteilen, dann ergibt sich eine weitere, ökonomisch besonders günstige erfindungsgemäße Version des Reaktors, die durch einfache Konstruktion und Betriebsweise sowie durch relativ kurze Reaktorlängen ausgezeichnet ist.

Da die Polymerisation von $\alpha$-Olefinen ein exothermer Prozeß ist, ist es erforderlich, daß die Reaktionswärme effektiv abgeführt werden kann. Die Wärmeabfuhr erfolgt vorzugsweise über die Reaktorwand. Vorteilhaft ist z.B., wenn das Reaktionsrohr mit einem Kühlmantel versehen ist, in welchem eine Kühlflüssigkeit, z. B. Wasser, zirkulieren kann. Um die Reaktionstemperatur konstant zu halten oder, wenn gewünscht, an verschiedenen Reaktorteilen unterschiedliche definierte Temperaturen einstellen zu können, ist es weiterhin von Vorteil, das Kühlsystem zu segmentieren.

Nach dem erfindungsgemäßen Polymerisationsverfahren können verschiedene ethylenisch ungesättigte Monomere zur Polymerisation gebracht werden. Zu nennen sind beispielsweise Ethylen, Propylen, 1-Buten, Iso-Buten, 1-Penten, 1-Hexen, 1-Hepten, 1-Octen und auch höhere $\alpha$-Olefine; weiterhin kommen z.B. auch Diene wie Butadien und Cyclopentadien und Cycloolefine wie Cyclopenten und Cyclohexen in Betracht. In Abhängigkeit von dem verwendeten Katalysatorsystem können auch polare Monomere wie Acrylsäureester oder Vincylacetat polymerisiert bzw. als Comonomere eingesetzt werden. Die ethylenisch ungesättigten Monomere können allein oder in Mischungen polymerisiert werden. Eine bevorzugte Ausführungsform des erfindungsgemäßen Verfahrens ist dadurch gekennzeichnet, daß als $\alpha$-Olefine Ethylen, Propylen, 1-Buten, 1-Penten, 1-Hexen, 1-Octen oder Gemische dieser Monomere eingesetzt werden, wobei die Copolymerisation von Ethylen mit 1-Buten oder 1-Hexen sowie die Homopolymerisation von Ethylen und Propylen besonders bevorzugt sind.

Die Vorteile des erfindungsgemäßen Verfahrens, insbesondere die Möglichkeit, sehr homogene Polymerprodukte herzustellen, macht sich besonders dann bemerkbar, wenn die Reaktionsbedingungen entlang des röhrenförmigen Reaktors variiert werden. So ist es, wie eingangs erwähnt, von Vorteil, daß entlang des Reaktorrohres unterschiedliche Temperaturen eingestellt werden. Noch ausgeprägter lassen sich die Produkteigenschaften variieren und insbesondere vorteilhafte bi- oder multimodale Polymerprodukte herstellen, indem in verschiedenen Bereichen des röhrenförmigen Reaktors unterschiedliche Gaszusammensetzungen eingestellt werden. Die einfachste Möglichkeit die Gaszusammensetzung entlang des Rohrreaktors zu verändern besteht darin, daß entlang des Reaktorrohres durch entsprechende Einspeisvorrichtungen frische Reaktionsgasbestandteile zugegeben werden. So kann z.B. das Reaktionsgas mit frischen Monomeren angereichert werden oder es kann zusätzlich Molekulargewichtsregler wie etwa Wasserstoff eingespeist werden. Insbesondere für den Fall, daß entlang des Reaktorrohres an verschiedenen Positionen frisches Monomer zugegeben wird, ist es von Vorteil, dieses Monomer auch zur Abfuhr der Reaktionswärme zu benutzen. Das kann z.B. dadurch geschehen, daß das Monomer in kühler Form, möglicherweise auch bei einer Temperatur unterhalb des Taupunktes des zugespeisten Monomerengemisches, zugegeben wird.

Noch größere Variationsmöglichkeiten bei der Einstellung der Polymereigenschaften kann man erreichen, indem bei dem Reaktor mindestens eine Einrichtung zur Gas-Feststofftrennung im Bereich zwischen Eingang und Ausgang des Reaktors angeordnet ist und dabei der Feststoffanteil weiter in Strömungsrichtung durch den Reaktor geführt wird und das abgetrennte Reaktionsgas zurückgeführt und stromaufwärts wieder in den Reaktor eingespeist wird. Eine solche Gas-Festofftrennung läßt sich am einfachsten durch einen Zyklon erreichen. Dieser Zyklon ist vorzugsweise am oberen Ende eines abwärts gerichteten Rohrteils angeordnet, so daß das Polymerisatpulver in diesen Rohrteil durch den Einfluß der Schwerkraft hineinrieseln kann. Das abgetrennte Reaktionsgas kann dann zurückgeführt werden und entweder am Eingang des Reaktors oder zumindest an einer Position stromaufwärts von diesem Zyklon wieder in den Reaktor eingespeist werden. Dabei kann es vorteilhaft sein, das Reaktionsgas zu kühlen, um auf diese Weise zusätzlich Reaktionswärme aus dem Prozeß abzuführen. Auch ist es im allgemeinen sinnvoll das im Kreis geführte Reaktionsgas mit den im Prozeß verbrauchten Monomeren und anderen Reaktionskomponenten anzureichern, um auf diese Weise konstante Gasbedingungen in dem entsprechenden Reaktorabschnitt einstellen zu können.

Eine vorteilhafte Ausführungsform des erfindungsgemäßen Verfahrens ist dadurch gekennzeichnet, daß entlang des Reaktors eingespeiste Gase am unteren Ende der Reaktorteile mit aufwärts gerichteter Strömungsrichtung und unterhalb des Ortes, an welchem der Partikelstrom in diese Reaktorteile eintritt, zugeführt werden. Dies kann am einfachsten dadurch erreicht werden, daß am unteren Ende der Reaktorteile mit aufwärts gerichteter Strömungsrichtung ein Gasverteilerboden in der Art, wie er im Gasphasenwirbelschichtverfahren üblicherweise eingesetzt wird, angebracht ist. Dabei strömt also der Polymerpartikelstrom durch einen unteren Bogen in das aufwärts gerichtete Reaktorrohrteil, fließt dabei über diesen Gasverteilerboden hinweg und wird durch das neu eingespeiste Reaktionsgas nach oben gewirbelt.

Ein vorteilhaftes Verfahren im Sinne der Erfindung ist dadurch gekennzeichnet, daß der verwendete Reaktor mindestens eine solche Gas-Feststofftrennungseinrichtung aufweist, vorzugsweise sogar zwei oder mehr dieser Einrichtungen.

Die Reaktionsbedingungen, die in den unterschiedlichen Reaktorbereichen eingestellt werden können, sind in breiter Weise variierbar. So können je nach dem gewünschten Polymer nacheinander Reaktionsbedingungen eingestellt werden, wie sie dem Fachmann aus anderen Gasphasenpolymerisationsverfahren, besonders aus einstufigen Prozessen bekannt sind. So kann die gewünschte Dichte insbesondere durch den Comonomeranteil eingestellt werden, das Molekulargewicht des Polymeren kann in der Regel wirkungsvoll durch die Konzentration z.B. von Wasserstoff beeinflußt werden.

Einen wesentlichen Einfluß auf die Polymereigenschaften haben natürlich die Katalysatoren, die zur Polymerisation eingesetzt werden. Als Katalysatoren kommen insbesondere geträgerte Katalysatoren in Betracht, wie sie üblicherweise auch bei anderen Gasphasenpolymerisationsverfahren eingesetzt werden.

Als Trägermaterial für die Katalysatoren eignen sich z.B. anorganische Oxide wie Silika, Aluminiumoxid oder Magnesiumoxid, aber auch komplexere Trägermaterialien wie beispielsweise Alumosilikate oder Zeolithe können als Träger eingesetzt werden. Auch organische Trägermaterialien, beispielsweise auf Polystyrolbasis, kommen zu diesem Zweck in Betracht.

Als Katalysatoren lassen sich z.B. alle dem Fachmann bekannten Chrom-, Ziegler- oder Metallocenkatalysatoren einsetzen. Auch die dabei zu verwendenden Cokatalysatoren sind dem Fachmann bekannt; auch an diese stellt das erfindungsgemäße Verfahren keine besonderen Anforderungen. Weiterhin kann es vorteilhaft sein, die geträgerten Katalysatorpartikeln zunächst einer Präpolymerisation zu unterwerfen. Diese Präpolymerisation, bei der nur geringe Monomermengen auf den Katalysatorpartikeln zur Polymerisation gebracht werden, kann entweder außerhalb des Reaktors z.B. in bekannter Weise durch Lösungs- oder Suspensionspolymerisation vorgenommen werden. Es ist jedoch auch möglich, am Anfang des Rohrreaktors im ersten Bereich eine solche Präpolymerisation in flüssiger oder gasförmiger Phase durchzuführen. In einer solchen Präpolymerisationszone sollten vorzugsweise jedoch nur geringe Mengen Monomer umgesetzt werden, die höchstens 5 %, vorzugsweise weniger als 2 % des gewünschten Polymerprodukts ausmachen. Für eine eventuelle Präpolymerisation sowie allgemein für den ersten Bereich der Polymerisation in dem erfindungsgemäßen Reaktor wird vorzugsweise nur ein Monomer eingesetzt, beispielsweise Ethylen oder Propylen. Comonomerhaltige Reaktionsgasströme werden vorzugsweise erst im Anschluß an diese ersten Polymerisationsschritte in den Reaktor eingespeist.

In einer bevorzugten Ausführungsform wird der Anfangsteil des erfindungsgemäßen Reaktors, d.h. der erste aufwärtsgerichtete Rohrabschnitt wie folgt gestaltet: Das untere Rohrstück dieses aufwärtsgerichteten Rohrabschnitts wird so ausgestaltet, daß es einen deutlich größeren Durchmesser als der obere Teil dieses Rohrabschnitts aufweist. In dieses untere Rohrstück wird der Katalysator eingespeist. Die Abfuhr der Reaktionswärme geschieht in diesem Rohrstück vornehmlich durch Einspeisung von flüssigem Monomer, vorzugsweise von flüssigem Propylen und/oder von flüssigem Inertgas, etwa Propan. In einer technischen Ausführungsform sollte das untere Rohrstück einen Durchmesser von mindestens einem Meter, vorzugsweise von mindestens 2 m aufweisen. Dadurch wird u. a. eine effektive konvektive Kühlung erreicht. Die Gasgeschwindigkeit in dem unteren Rohrstück liegt vorteilhaft zwischen 0,2 und 0,6 ms$^{-1}$, die Bettdichte vorteilhaft zwischen 150 und 400 kg/m$^3$. Der obere Teil des ersten aufwärtsgerichteten Rohrabschnitts weist demgegenüber einen geringeren Durchmesser auf, was zu einer höheren Strömungsgeschwindigkeit führt. Dieser Reaktorteil kann auch als Multirohrreaktor ausgebildet sein, wodurch eine bessere Wärmeabfuhr über den Reaktormantel sowie eine sehr eingeschränkte Rückvermischung erreicht werden kann.

Der erfindungsgemäße röhrenförmige Reaktor umfaßt mindestens eine Einrichtung zur Reaktionsgaseinspeisung, mindestens eine Einrichtung zur Katalysatoreinspeisung, ein Polymeraustragssystem und mindestens eine Einrichtung zur Abtrennung des Reaktionsgases von den Polymerpartikeln und Rückführung des Reaktionsgases in den Eingangsbereich des Reaktors. Für den Fall, daß der Reaktor nur eine Einrichtung zur Abtrennung des Reaktionsgases von den Polymerpartikeln aufweist, ist diese am Ende des Reaktors angebracht und mit dem Polymeraustragssystem gekoppelt. Vorzugsweise erfolgt die Abtrennung des Polymeren vom Gasstrom durch einen Zyklon. Der Teilchenstrom wird dann vorzugsweise in einen abwärtsgerichteten Rohrreaktroteil eingeleitet, der mit einem Gasstrom geringer Monomerkonzentration leicht fluidisiert wird, während die Produktentnahme vorzugsweise durch intermittierende oder kontinuierliche Entspannung am unteren Ende dieses Rohrstückes erfolgt, wobei der Füllstand in diesem Rohrstück konstant gehalten wird.

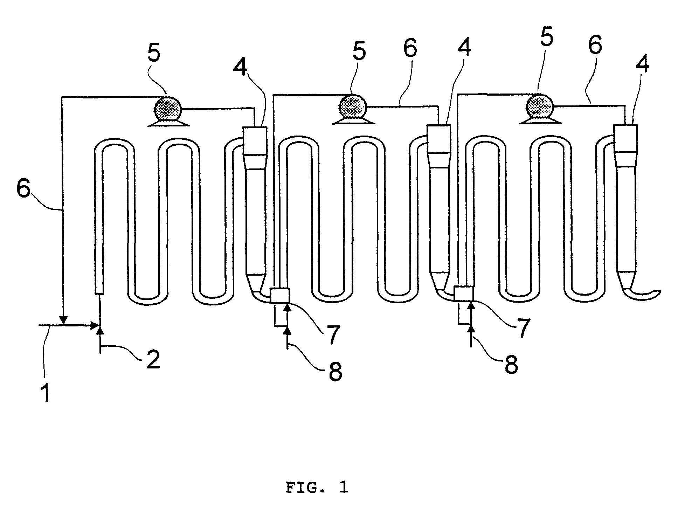

Eine vorteilhafte Ausführungsform des erfindungsgemäßen Reaktors zeigt Fig. 1. Die Einspeisung des Reaktionsgases erfolgt über die Leitung (1), der Katalysator, gegebenenfalls in Verbindung mit einem geeigneten Cokatalysator, kann durch die Leitung (2) in den Reaktor eingetragen werden. Das Polymerisationsgemisch wandert nun zunächst durch ein vertikal angeordnetes Rohrsystem von aufwärts und abwärts gerichteten Rohrteilen, die durch Bögen miteinander verbunden sind. In dem Zyklon (4) erfolgt eine erste Trennung der Polymerpartikel von dem Reaktionsgas. Das abgetrennte Reaktionsgas wird über einen Kompressor (5) und eine Kreisgasleitung (6), welche gegebenenfalls mit einer Kühleinrichtung versehen sein kann, wieder in den Reaktor eingespeist, wobei die Gaszusammensetzung durch die Dosierung des Reaktionsgasstromes 1 eingestellt werden kann. Das in dem Zyklon (4) vom Reaktionsgas getrennte Polymerpulver wird zunächst durch ein abwärts gerichtetes Rohrteil geleitet und dann wieder in ein aufwärts gerichtetes Rohrteil umgeleitet, wobei am unteren Ende dieses aufwärts gerichteten Rohrteils ein Gasverteilerboden (7) angebracht ist, durch welches ein zweiter Kreisgasstrom (6), gegebenenfalls angereichert durch frisches Monomer oder zusätzliches Comonomer, in den Rohrreaktor eingespeist wird und zur Verwirbelung und zum weiteren Transport der Polymerpartikeln genutzt wird. Der in Fig. 1 schematisch wiedergegebene Reaktor enthält 3 Einrichtungen zur Abtrennung des Reaktionsgases von den Polymerpartikeln, wobei die Dritte dieser Einrichtungen zugleich Bestandteil des Polymeraustragssystems ist.

Beispiel

Herstellung von bimodalen Ethylencopolymeren

Die Polymerisation wurde durchgeführt in einem Reaktor, bestehend aus einem ersten Rohrreaktorteil A (Länge = 80 m, Innendurchmesser = 5 cm), einer Gas-Feststofftrennung (Zyklon) mit integriertem (nachfolgendem) Rieselreaktor B (Länge = 5 m, Innendurchmesser = 10 cm) und einem zweiten Rohrreaktorteil C (Länge = 120 m, Innendurchmesser = 5 cm), dem eine weitere Gas-Feststofftrennung mit Zellradausschleusung und nachfolgender Entspannung des Produktes angeschlossen wurde. Reaktorteil B wurde über einen weiteren entgegen der Polymerstromrichtung gerichtete Gaskreislauf in fluidisiertem Zustand gehalten, wodurch gleichzeitig eine gut regelbare Abtrennung des Wasserstoffs gelingt. Am Eingang des Reaktorteils A wurde 40 gh$^{-1}$ eines präpolymerisierten Katalysators (Ziegler-Natta-KChromkatalysator auf Kieselgel geträgert, mit Propylen in Suspension vorpolymerisiert) injiziert, dessen mittlere Aktivität im Reaktorteil A 5,98 kg PE/(g Prepolymer h), im Reaktorteil B 0,51 kg PE/(g Prepolymer h) und im Reaktorteil C 8,05 kg PE/(g Prepolymer h) betrug. Der mittlere Teilchendurchmesser des Prepolymeren betrug etwa 150 μm. Durch Zwischeneinspeisungen von Ethylen und Wasserstoff wurde das molare Ethylen:Wasserstoff-Verhältnis im Reaktorteil A auf 4,8 und in den Reaktorteil B und C auf 100 eingestellt. Auf gleiche Weise wurde das Hexen: Ethylen-Verhältnis im Reaktorteil A auf 0 und in den Reaktorteilen B und C auf 0,1 gehalten. Durch Regulierung der Gasgeschwindigkeit wurden die Verweilzeiten der festen Phase (Polymeres) auf 9 Minuten, 0,5 Minuten und 6 min für die drei Reaktorteile eingestellt. Bei einer mittleren Temperatur von 70°C, 90°C und 85°C wurden 57 kgh$^{-1}$ bimodales PE mit einer mittleren Teilchengröße von 1580 µm produziert.

**Patentansprüche**

1. Verfahren zur Gasphasenpolymerisation von $\alpha$-Olefinen bei Temperaturen zwischen 20 und 130°C und Drücken von 1 bis 100 bar, **dadurch gekennzeichnet, daß** man die Polymerisation in einem röhrenförmigen Reaktor mit einem Länge:Durchmesser-Verhältnis von > 100 durchführt, wobei die wachsenden Polymerpartikeln den röhrenförmigen Reaktor in seiner Längsrichtung durchlaufen ohne daß ein wesentlicher Teil des Polymerpartikelstroms im Kreis geführt wird.

2. Verfahren nach Anspruch 1, **dadurch gekennzeichnet, daß** der röhrenförmige Reaktor ein Länge:Durchmesser-Verhältnis von >300 aufweist.

3. Verfahren nach Anspruch 1 oder 2, **dadurch gekennzeichnet, daß** der röhrenförmige Reaktor im Wesentlichen vertikal angeordent ist.

4. Verfahren nach den Ansprüchen 1 bis 3, **dadurch gekennzeichnet, daß** die effektifve Axialgeschwindigkeit des Polymerpulvers in Reaktorteilen mit aufwärtsgerichteter Strömungsrichtung weniger als 80 % der Geschwindigkeit des Reaktionsgases in diesen Reaktorteilen beträgt.

5. Verfahren nach den Ansprüchen 1 bis 4, **dadurch gekennzeichnet, daß** die effektifve Axialgeschwindigkeit des Polymerpulvers in Reaktorteilen mit aufwärtsgerichteter Strömungsrichtung 5 bis 200 cm/s beträgt.

6. Verfahren nach den Ansprüchen 1 bis 5, **dadurch gekennzeichnet, daß** die Polymerisationstemperatur zwischen 70 und 120°C beträgt.

7. Verfahren nach den Ansprüchen 1 bis 6, **dadurch gekennzeichnet, daß** als $\alpha$-Olefine Ethylen, Propylen, 1-Buten, 1-Penten, 1-Hexen, 1-Octen oder Gemische dieser Monomeren eingesetzt werden.

8. Verfahren nach den Ansprüchen 1 bis 7, **dadurch gekennzeichnet, daß** der röhrenförmige Reaktor mindestens eine Einrichtung zur Gas/Feststoff-Trennung aufweist.

9. Verfahren nach Anspruch 8, **dadurch gekennzeichnet, daß** mindestens eine Einrichtung zur Gas/Feststoff-Trennung im Bereich zwischen Eingang und Ausgang des Reaktors angeordnet ist und dabei der Feststoffanteil weiter in Strömungsrichtung durch den Reaktor geführt wird und das abgetrennte Reaktionsgas zurückgeführt und stromaufwärts wieder in den Reaktor eingespeist wird.

10. Verfahren nach den Ansprüchen 1 bis 9, **dadurch gekennzeichnet, daß** entlang des Reaktors eingespeiste Gase am unteren Ende der Reaktorteile mit aufwärtsgerichteter Strömungsrichtung und unterhalb des Ortes, an welchem der Partikelstrom in diese Reaktorteile eintritt, zugeführt werden.

11. Verfahren nach den Ansprüchen 1 bis 10, **dadurch gekennzeichnet, daß** in verschiedenen Bereichen des röhrenförmigen Reaktors unterschiedliche Gaszusammensetzungen eingestellt werden.

12. Verfahren nach den Ansprüchen 1 bis 11, **dadurch gekennzeichnet, daß** entlang des Reaktorrohres durch entsprechende Einspeisevorrichtungen frische Reaktionsgasbestandteile zugegeben werden.

13. Verfahren nach den Ansprüchen 1 bis 12, **dadurch gekennzeichnet, daß** entlang des Reaktorrohres unterschiedliche Temperaturen eingestellt werden.

14. Röhrenförmiger Reaktor zur Gasphasenpolymerisation von $\alpha$-Olefinen mit einem Rohrdurchmesser im Bereich von 10 bis 100 cm, einer Länge von 50 bis 2000 m und einem Länge:Durchmesserverhältnis von >100, umfassend mindestens eine Einrichtung zur Reaktionsgaseinspeisung, mindestens eine Einrichtung zur Katalysatoreinspeisung, ein Polymeraustragssystem und mindestens eine Einrichtung zur Abtrennung des Reaktionsgases von den Polymerpartikeln und Rückführung des Reaktionsgases in den Eingangsbereich des Reaktors oder zur Einspeisung des Reaktionsgases stromaufwärts von der Abtrennposition.

**Claims**

1. A process for the gas-phase polymerization of $\alpha$-olefins at from 20 to 130°C and pressures of from 1 to 100 bar, wherein the polymerization is carried out in a tubular reactor having a length:diameter ratio of > 100 and the growing polymer particles pass through the tubular reactor in its longitudinal direction without a significant part of the polymer particle stream being circulated.

**2.** A process as claimed in claim 1, wherein the tubular reactor has a length:diameter ratio of > 300.

**3.** A process as claimed in claim 1 or 2, wherein the tubular reactor is arranged essentially vertically.

**4.** A process as claimed in any of claims 1 to 3, wherein the effective axial velocity of the polymer powder in reactor sections having an upward flow direction is less than 80% of the velocity of the reaction gas in these reactor sections.

**5.** A process as claimed in any of claims 1 to 4, wherein the effective axial velocity of the polymer powder in reactor sections having an upward flow direction is from 5 to 200 cm/s.

**6.** A process as claimed in any of claims 1 to 5, wherein the polymerization temperature is from 70 to 120°C.

**7.** A process as claimed in any of claims 1 to 6, wherein the α-olefin used is ethylene, propylene, 1-butene, 1-pentene, 1-hexene, 1-octene or a mixture of these monomers.

**8.** A process as claimed in any of claims 1 to 7, wherein the tubular reactor comprises at least one facility for gas/solid separation.

**9.** A process as claimed in claim 8, wherein at least one facility for gas/solid separation is located in the region between the inlet and the outlet of the reactor and the solids are conveyed further through the reactor in the flow direction and the reaction gas which has been separated off is conveyed back and is refed into the reactor at an upstream point.

**10.** A process as claimed in any of claims 1 to 9, wherein gases fed in along the reactor are introduced at the lower end of the reactor sections having an upward flow direction and below the point at which the particle stream enters these reactor sections.

**11.** A process as claimed in any of claims 1 to 10, wherein different gas compositions are set in various regions of the tubular reactor.

**12.** A process as claimed in any of claims 1 to 11, wherein fresh reaction gas constituents are added along the reactor tube by means of appropriate feed facilities.

**13.** A process as claimed in any of claims 1 to 12, wherein different temperatures are set along the reactor tube.

**14.** A tubular reactor for the gas-phase polymerization of α-olefins having a tube diameter in the range from 10 to 100 cm, a length from 50 to 2000 m and a length:diameter ratio of > 100, comprising at least one facility for feeding in reaction gas, at least one facility for feeding in catalyst, a polymer discharge system and at least one facility for separating the reaction gas from the polymer particles and recirculating the reaction gas to the inlet region of the reactor or for feeding in the reaction gas at a point upstream of the separation position.

**Revendications**

**1.** Procédé de polymérisation en phase gazeuse d'α-oléfines à des températures comprises entre 20 et 130°C et sous des pressions de 1 à 100 bar, **caractérisé en ce qu'**on met en oeuvre la polymérisation dans un réacteur tubulaire ayant un rapport longueur:diamètre > 100, les particules polymères en cours de croissance traversant le réacteur tubulaire dans la direction de sa longueur, sans qu'une partie importante du courant de particules polymères ne passe en circuit fermé.

**2.** Procédé selon la revendication 1, **caractérisé en ce que** le réacteur tubulaire présente un rapport longueur:diamètre > 300.

**3.** Procédé selon la revendication 1 ou 2, **caractérisé en ce que** le réacteur tubulaire est disposé d'une manière essentiellement verticale.

**4.** Procédé selon les revendications 1 à 3, **caractérisé en ce que** la vitesse axiale utile de la poudre polymère, dans les parties du réacteur dans lesquelles l'écoulement s'écoule vers le haut, est inférieurs à 80 % de la vitesse du gaz réactionnel dans ces parties du réacteur.

**5.** Procédé selon les revendications 1 à 4, **caractérisé en ce que** la vitesse axiale utile de la poudre polymère dans les parties du réacteur dans lesquelles l'écoulement s'effectue vers le haut, est de 5 à 200 cm/s.

**6.** Procédé selon les revendications 1 à 5, **caractérisé en ce que** la température de polymérisation est comprise entre 70 et 120°C.

**7.** Procédé selon les revendications 1 à 6, **caractérisé en ce qu'**on utilise en tant qu'α-oléfines l'éthylène, le propylène, le 1-butène, le 1-pantène, le 1-hexène, le 1-octène, ou des mélanges de ces monomères.

**8.** Procédé selon les revendications 1 à 7, **caractérisé en ce que** le réacteur tubulaire comporte au moins un dispositif de séparation gaz/solide.

9. Procédé selon la revendication 8, **caractérisé en ce qu'**au moins un dispositif de séparation gaz/solide est disposé dans la zone située entre l'entrée et la sortie du réacteur, les matières sèches étant envoyées plus avant dans le réacteur dans la direction de l'écoulement, le gaz réactionnel séparé étant renvoyé, et réinjecté en amont dans le réacteur.

10. Procédé selon les revendications 1 à 9, **caractérisé en ce que** les gaz injectés le long du réacteur sont envoyés à l'extrémité inférieure des parties du réacteur dans lesquelles l'écoulement est dirigé vers le haut, et en dessous du point où le courant de particules pénètre dans ces parties du réacteur.

11. Procédé selon les revendications 1 à 10, **caractérisé en ce que** des compositions gazeuses différentes sont ajustées dans les différentes zones du réacteur tubulaire.

12. Procédé selon les revendications 1 à 11, **caractérisé en ce que**, le long du réacteur, des constituants frais de gaz réactionnel sont introduits grâce à des dispositifs d'injeetion correspondants.

13. Procédé selon les revendications 1 à 12, **caractérisé en ce que** des températures différentes sont ajustées le long du tuba du réacteur.

14. Réacteur tubulaire pour la polymérisation en phase gazeuse d'$\alpha$-oléfines, ayant un diamètre de tube compris dans la plage de 10 à 100 cm, une longueur de 50 à 2000 m et un rapport longueur:diamètre > 100, comprenant au moins un dispositif pour l'injection du gaz réactionnel, au moins un dispositif pour l'injection du catalyseur, un système d'évacuation du polymère et au moins un dispositif pour séparer le gaz réactionnel des particules polymères et pour renvoyer le gaz réactionnel dans la zone d'entrée du réacteur, ou pour injecter le gaz réactionnel en amont de la position de séparation.

FIG. 1